(19) Europäisches Patentamt
European Patent Office
Office européen des brevets

(11) **EP 3 961 528 A1**

(12) **EUROPÄISCHE PATENTANMELDUNG**

(43) Veröffentlichungstag:
**02.03.2022 Patentblatt 2022/09**

(21) Anmeldenummer: **20192661.5**

(22) Anmeldetag: **25.08.2020**

(51) Internationale Patentklassifikation (IPC):
*G06Q 10/06* (2012.01)          *G06Q 50/04* (2012.01)
*G06Q 10/04* (2012.01)

(52) Gemeinsame Patentklassifikation (CPC):
**G06Q 10/063; G06Q 10/04; G06Q 50/04**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Haselböck, Alois**
**3392 Schönbühel-Aggsbach (AT)**

(74) Vertreter: **Maier, Daniel Oliver**
**Siemens AG**
**Postfach 22 16 34**
**80506 München (DE)**

(54) **VERFAHREN UND VORRICHTUNG ZUR HERSTELLUNG EINES PRODUKTS MITTELS EINER OPTIMALEN PROZESSKETTE**

(57)    Verfahren zur Herstellung eines Produkts mittels einer optimalen Prozesskette, wobei eine Menge an Ausführungsgraphen (G) gebildet wird (110), und folgende Schritte ausgeführt werden:
a) Prüfen, ob eine Abbruchbedingung erfüllt ist,
a1) Falls ja, Fortfahren mit Schritt c)
a2) Falls nein, Auswählen eines aktuellen Graphen, welcher noch nicht ausgewählt wurde, aus der Menge an Ausführungsgraphen,

b) Feststellen für den aktuellen Graphen, ob noch verfügbarer Speicher des aktuellen Graphen (G) vorhanden ist:
b1) Falls ja (111), Speichern (120) des aktuellen Graphen (G) mit einer vorbestimmten Größe, und Fortfahren mit Schritt a),
b2) Falls nein (112), Berechnen (130) eines aktuellen Werts für das Diversitäts-Maß des aktuellen Graphs, und Prüfen, ob der aktuelle Wert geringer ist, als der kleinste Wert der gespeicherten Graphen,
b2a) Falls ja (131), Austauschen (130, 140) des Graphen mit dem kleinsten Diversitäts-Maß durch den aktuellen Graphen, und Fortfahren mit Schritt a),
b2b) Falls nein (132), Verwerfen des neuen Graphen, und Fortfahren mit Schritt a),

c) Auswählen des Graphen anhand des Diversitäts-Maßes der jeweiligen Prozesskette als optimale Prozesskette aus dem Speicher,
d) Herstellen des Produkts mithilfe der an Herstellungsschritten (H1-H3) und Herstellungsmittel (M1-M4) in einer festgelegten Reihenfolge gemäß der optimalen Prozesskette.

FIG 4

## Beschreibung

Die Erfindung betrifft ein Verfahren und eine Vorrichtung zur Herstellung eines Produkts mittels einer optimalen Prozesskette, wobei eine Prozesskette zur Herstellung durch Herstellungsschritte durch entsprechende Herstellungsmittel in einer festgelegten Reihenfolge definiert ist.

In der zukünftigen Automatisierung bilden Ausführungsgraphen eine gültige Produktionssequenz für die Herstellung eines Produkts in einem bestimmten Werk.

Für Anlagen und Produkte von realer Größe ist die Anzahl möglicher, gültiger Ausführungsgraphen tendenziell groß (beispielsweise $10^{10}$), da das Problem der Erzeugung von Ausführungsgraphen normalerweise ein unterbeschränktes Problem ist.

Solche riesigen Sätze von Ausführungsgraphen können von schnellen Lösern (normalerweise Constraint-Solver) auf leistungsstarken Computern oder in letzter Zeit auf vielen Computern parallel in der Cloud generiert werden.

Beim Umgang mit solch großen Sätzen von Ausführungsgraphen können verschiedene Probleme festgestellt werden:

    i. Speicherproblem: Der zum Speichern der Ausführungsgraphen benötigte Speicher ist proportional zur Anzahl der Graphen: Je mehr Graphen erstellt werden, desto mehr Speicher wird benötigt.

    ii. Übertragungsproblem: Wenn die Ausführungsgraphen remote auf einem Server oder in der Cloud hergestellt werden, müssen die Graphen auf einen lokalen Server heruntergeladen werden, was zu einer langen Übertragungszeit und der Notwendigkeit einer hohen Bandbreite führt.

    iii. Verbraucherproblem: Der Verbraucher dieser Ausführungsgraphen ist in der Regel ein Scheduler, der die Operationen eines Stapels von Produktionsaufträgen zu Maschinen im Kontext eines MES (engl. "Manufacturing Execution System") zuweist.

    Die Planung selbst ist ein kombinatorisches Problem und verwendet als Eingabe die Menge von Ausführungsgraphen aller Produkte im Auftragsstapel. Es ist äußerst wichtig, den Scheduler nicht durch eine zu große Anzahl von Ausführungsgraphen zu überlasten.

Daher sollte der Satz von Ausführungsgraphen für einen Verbraucher, wie einen Scheduler, auf eine überschaubare Größe reduziert werden.

Es sollte in der Praxis eine Größenordnung von $10^2$ bis $10^3$ angestrebt werden.

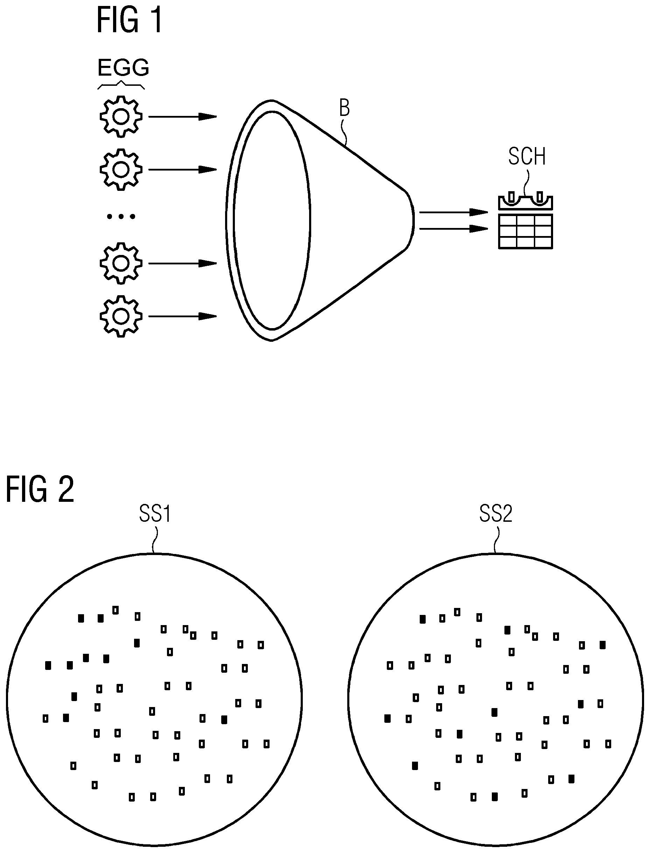

Fig. 1 zeigt eine symbolische Darstellung der erfindungsgemäßen Aufgabe, nämlich das Auswählen einer überschaubaren Teilmenge aller erstellten Ausführungsgraphen.

Die von einem Erzeuger EGG von Ausführungsgraphen (engl. "execution graph generation") generierten Ausführungsgraphen sollen von einem Verbraucher SCH, also einem Konsumenten (engl. "scheduler") aufgenommen werden und zur Herstellung eines Produkts verwendet werden.

Zwischengelagert befindet sich allerdings ein Flaschenhals B (engl. "bottleneck"), welcher das zuvor genannte Speicherproblem und das Übertragungsproblem repräsentiert.

Eine Standardmethode zum Reduzieren der Anzahl von Ausführungsgraphen besteht darin, die Erstellung einfach zu stoppen, wenn die maximale Anzahl von Graphen generiert wurde.

In einer verbesserten Version dieser Methode optimiert der Solver für ein bestimmtes Kriterium, wie beispielsweise eine minimale Zeitspanne für die Produktion, sodass zuerst Graphen mit der gewünschten Qualität berechnet werden.

Diese Methoden sind unkompliziert und einfach zu implementieren, haben jedoch den großen Nachteil: die resultierenden Graphen sind oft zufällig und/oder einseitig.

Beispielsweise kann es vorkommen, dass bestimmte Maschinen in der resultierenden Menge von Graphen überhaupt nicht berücksichtigt werden, weil der Constraint-Solver durch ein Timeout unterbrochen wurde, bevor Graphen mit diesen Maschinen erstellt wurden, oder, weil diese Maschinen eher langsam sind und sie daher aufgrund einer Zeitspannenoptimierung nicht berücksichtigt werden.

Die Wahrscheinlichkeit, dass die berechneten Ausführungsgraphen und damit die Eingabe in den Scheduler nur sehr kleine Bereiche des Lösungsraums abdecken, und andere Bereiche vollständig ignoriert werden, ist daher hoch.

Wenn beispielsweise einige Maschinen nicht Teil eines Ausführungsgraphen sind, verliert der Scheduler die Möglichkeit, diesen Maschinen Operationen zuzuweisen und daher einen global optimierten Auftragsstapelplan zu finden.

Mit anderen Worten ist es eine Aufgabe der Erfindung aus einer Menge an Ausführungsgraphen jene Teilmenge auszuwählen, die zu einer optimalen Lösung mit einem geringen Speicherbedarf, einer geringen Datenübertragungsmenge und einer raschen Auswahl aus möglichen Ausführungsgraphen führen.

Die erfindungsgemäße Aufgabe wird durch ein Verfahren eingangs genannter Art gelöst, wobei eine Menge an Ausführungsgraphen für alle möglichen Permutationen an Herstellungsschritten und Herstellungsmitteln unter Berücksichtigung der Reihenfolge gebildet wird, und folgende Schritte ausgeführt werden:

a) Prüfen, ob eine Abbruchbedingung erfüllt ist,

a1) Falls ja, Fortfahren mit Schritt c)
a2) Falls nein, Auswählen eines aktuellen Graphen, welcher noch nicht ausgewählt wurde, aus der Menge an Ausführungsgraphen,

b) Feststellen für den aktuellen Graphen, ob in einem Speichermittel noch verfügbarer Speicher zum Speichern des aktuellen Graphen vorhanden ist:

b1) Falls ja, Speichern des aktuellen Graphen durch das Speichermittel mit einer vorbestimmten Größe, und Fortfahren mit Schritt a),

b2) Falls nein, Berechnen eines aktuellen Werts für das Diversitäts-Maß des aktuellen Graphs, und Prüfen, ob der aktuelle Wert geringer ist, als der kleinste Wert für das Diversitäts-Maß der im Speichermittel (R) gespeicherten Graphen,

b2a) Falls ja, Austauschen des Graphen mit dem kleinsten Diversitäts-Maß im Speichermittel durch den aktuellen Graphen, und Fortfahren mit Schritt a),

b2b) Falls nein, Verwerfen des neuen Graphen, und Fortfahren mit Schritt a),

c) Auswählen des Graphen anhand des Diversitäts-Maßes der jeweiligen Prozesskette als optimale Prozesskette aus dem Speicher,

d) Herstellen des Produkts mithilfe der an Herstellungsschritten und Herstellungsmittel in einer festgelegten Reihenfolge gemäß der optimalen Prozesskette.

Als Abbruchbedingung für die Schleife kann beispielsweise das Erreichen der Belegung einer maximalen Speichergröße des Speichers oder das Erreichen einer vorgegebenen Zeit zur Bestimmung der gespeicherten Graphen angewandt werden.

Mit anderen Worten werden die Vorgänge a2) und b) werden so lange wiederholt, solange unter Einschränkung der zur Verfügung gestellten Ressourcen wie Zeit und Speicher Ausführungsgraphen berechnet werden können.

Durch die Erfindung kann eine reduzierte Menge von Graphen mit optimierter Diversität gefunden werden.

Mit anderen Worten kann eine Reihe von Graphen berücksichtigt werden, welche alle oder zumindest alle wichtigen Bereiche des möglichen Lösungsraums abdecken.

Unter der Menge an Ausführungsgraphen für alle möglichen Permutationen an Herstellungsschritten und Herstellungsmitteln wird jene Menge verstanden, die potenziell für die Herstellung in Frage kommen kann. Unsinnige Permutationen, wie unzulässige Reihenfolgen von Herstellungsschritten oder unzulässig lange dauernde Schritte auf einer zwar grundsätzlich geeigneten Maschine, jedoch nicht wirtschaftlich nutzbare Graphen, werden klarerweise nicht berücksichtigt.

Die Auswahl des optimalen Ausführungsgraphen aus der reduzierten, diversitären Menge von Ausführungsgraphen kann erfolgen, indem beispielsweise die Prozesskette mit dem kleinsten Diversitäts-Maß ausgewählt wird.

Fig. 2 zeigt eine symbolische Darstellung verschiedener Lösungsräume zur erfindungsgemäßen Aufgabe.

Die Auswahl von Ausführungsgraphen SS1 aus dem Lösungsraum weist eine "einseitige" Verteilung ausgewählter Lösungen auf, welche nicht den gesamten Lösungsraum repräsentieren.

Die Auswahl von Ausführungsgraphen SS2 aus dem Lösungsraum weist eine "vielfältige" Verteilung ausgewählter Lösungen, das heißt Lösungen mit hoher Diversität auf, welche durch die Erfindung erreicht werden können.

Ein Repository für Ausführungsgraphen mit begrenzter, überschaubarer Größe enthält eine Teilmenge aller generierten Ausführungsgraphen mit hoher Diversität.

Die Eigenschaft hoher Diversität verringert das Risiko, dass nur sehr ähnliche Graphen vom Scheduler verwendet werden, während andere Teile des Lösungsbereichs vollständig ignoriert werden.

In einer Weiterbildung der Erfindung ist es vorgesehen, dass im Schritt b1) ein jeweiliger Wert für das Diversitäts-Maß berechnet und im Speicher gespeichert wird, und bei der Prüfung im Schritt b2) dieser Wert vom Speicher abgefragt wird.

Dadurch können die Systemkomplexität und die Kosten gering gehalten werden.

In einer Weiterbildung der Erfindung ist es vorgesehen, dass die Größe des Speichermittels höchstens 10%, bevorzugt 1% der Anzahl in der Menge der Ausführungsgraphen beträgt.

Dadurch können die Systemkomplexität und die Kosten gering gehalten werden.

Die erfindungsgemäße Aufgabe wird auch durch eine Vorrichtung eingangs genannt Art gelöst, wobei die Vorrichtung Herstellungsmittel und eine Rechenvorrichtung mit einem Speicher umfasst, und die Vorrichtung dazu eingerichtet ist, das das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1      eine symbolische Darstellung der erfindungsgemäßen Aufgabe,

Fig. 2      eine symbolische Darstellung verschiedener Lösungsräume zur erfindungsgemäßen Aufgabe,

Fig. 3      eine symbolische Darstellung eines Aspekts zur erfindungsgemäßen Lösung,

Fig. 4      ein erfindungsgemäßes Ausführungsbeispiel in Form eines Flussdiagramms,

Fig. 5      Beispiele für Ausführungsgraphen,

Fig. 6      berechnete Distanzen zu den Beispielen der Fig. 5,

Fig. 7      berechnete Divergenzen zu den Beispielen der Fig. 5,

Fig. 8      ein Beispiel für ein Speicherabbild mit einem Ausführungsgraphen mit hoher Diversität,

Fig. 9      ein Beispiel für ein Speicherabbild mit einem Ausführungsgraphen mit niedriger Diversität,

Fig. 10     ein Beispiel mit einer Gegenüberstellung einer Anzahl an Maschinen und einer Anzahl an Herstellungsschritten für ein Produkt.

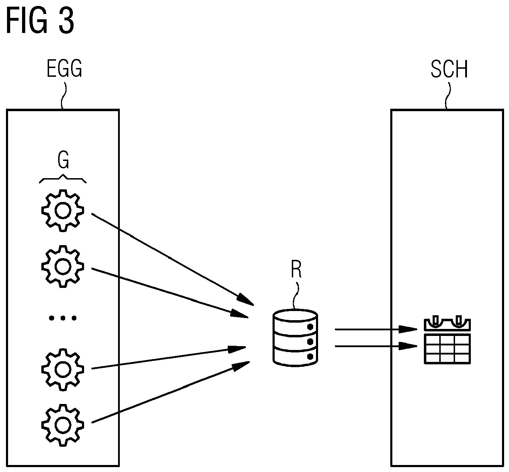

**Fig. 3** stellt symbolisch einen weiteren Aspekt zur erfindungsgemäßen Lösung dar, nämlich die Anwendung eines Speichers für Ausführungsgraphen, engl. "execution graph repository".

Ein Ausführungsgraph G repräsentiert einen Plan zur Herstellung eines Produkts. Typischerweise stellen die Knoten des Graphen G Herstellungsschritte dar, wobei ausführende Maschinen annotiert sind, die den Herstellungsschritt ausführen. Kanten stellen eine Abfolge-Relation dar.

In einem Speicher für Ausführungsgraphen, einem Repository R, sind Ausführungsgraphen gespeichert, wobei das Repository R eine Größe von *maxSize*(R) aufweist und die maximale Anzahl an Ausführungsgraphen angibt, die im Repository R abgelegt werden können. Typischerweise ist diese Speichergröße deutlich kleiner als die Anzahl aller möglichen Ausführungsgraphen, die zur Herstellung eines Produkts angegeben werden können.

Eine Distanz-Funktion d(G1, G2) kann als Messwert angesehen werden, wie unterschiedlich zwei Graphen G1 und G2 voneinander sind, wobei die Distanz eine mathematisch gültige Metrik mit folgenden standard-Eigenschaften ist:

$$d: G \times G \to \mathbb{R}$$

$$d(x, y) \geq 0$$

$$d(x, y) = 0 \leftrightarrow x = y$$

$$d(x, y) = d(y, x)$$

$$d(x, y) \leq d(x, z) + d(z, y)$$

Ein Beispiel für eine bekannte Distanzfunktion für Graphen ist die sogenannte Graph Edit-Distanz (GED), welche ein Maß für die Ähnlichkeit oder Unähnlichkeit zwischen zwei Graphen ist.

Ein Diversitäts-Maß div(G, R) eines Ausführungsgraphen G bezüglich des Speichers R ist die Summe aller Distanzen zu allen Graphen von R:

$$div(G, R) \leftarrow \sum_{G' \in R} d(G, G')$$

Ein großer Wert für das Diversitäts-Maß eines Graphen G bedeutet, dass der Graph G große Distanzen zu den Graphen in R aufweist.

$$div(R) \leftarrow \sum_{G \in R} div(G, R)$$

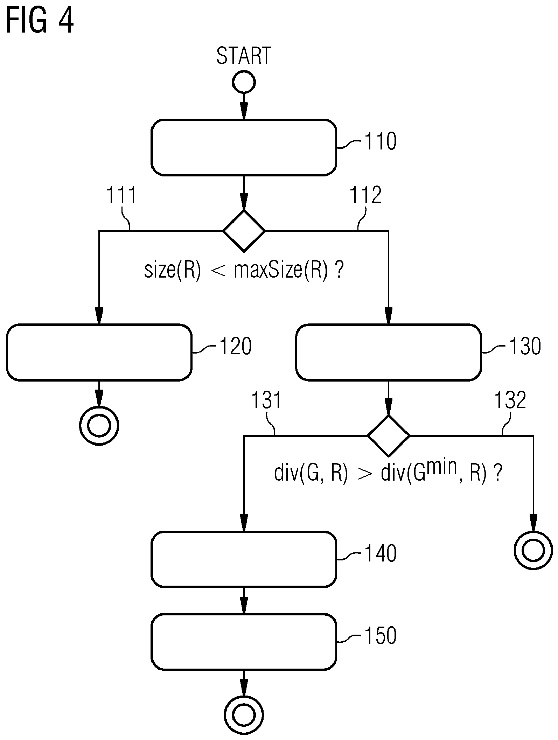

**Fig. 4** zeigt ein Ausführungsbeispiel zur Erzeugung eines Speichers R mit einer maximalen Vielfalt gemäß der Erfindung in Form eines Flussdiagramms.

Mit anderen Worten wird die Funktionen div(R) maximiert.

Wie zuvor beschrieben erzeugt der Ausführungsgraph-Erzeuger EGG eine große Anzahl an Ausführungsgraphen zu Herstellung eines gewünschten Produkts mit einer vorbestimmten Menge an entsprechenden Maschinen.

Für jeden ankommenden Graph entscheidet das in der Figur dargestellte Verfahren, ob ein neuer Graph vorteilhaft zur Vielfalt des Speichers R beiträgt.

Falls dies zutrifft, wird ein Graph im Speicher R ersetzt, welcher ein niedrigeres Diversitäts-Maß aufweist.

Falls dies nicht zutrifft, wird der Graph verworfen.

Es ist für das nachfolgend ausgeführte Verfahren eine Iteration vorgesehen, in welche bei jedem Durchlauf geprüft wird, ob eine Abbruchbedingung erfüllt ist.

Als Abbruchbedingung kann beispielsweise das Erreichen der Belegung einer maximalen Speichergröße des Speichers oder das Erreichen einer vorgegebenen Zeit zur Bestimmung der gespeicherten Graphen angewandt werden.

Trifft die Abbruchbedingung zu, so kann mit der Herstellung des gewünschten Produkts unter Verwendung einer anhand des Diversitäts-Maßes ausgewählten Prozesskette aus dem Speicher fortgefahren werden, ansonsten wird eine weitere Iteration ausgeführt.

Folgende Schritte werden von dem Verfahren während einer Iteration ausgeführt:

a) Falls die aktuelle Größe des Speichers R kleiner als die maximale Größe maxSize(R) ist, also der Fall 111 zutrifft, wird der jeweilige Graph zum Speicher R in einem Schritt 120 hinzugefügt.

Trivialerweise startet das Verfahren mit einem leeren Speicher R.

b) Ansonsten, also im Fall 112, das heißt, wenn der Speicher R voll ist (size(R)=maxSize(R)), wird der Graph $G^{min}$ in einem Schritt 130 bestimmt.

Der Graph $G^{min}$ ist der Ausführungsgraph des Speichers R mit dem minimalen Wert für das Diversitäts-Maß.

Dabei kann es vorkommen, dass mehrere Graphen denselben minimalen Wert für das Diversitäts-Maß aufweisen. In diesem Fall kann der Graph $G^{min}$ zufällig unter den Kandidaten bestimmt werden.

b2a) Falls der Wert für das Diversitäts-Maß des neuen Graphen G bezüglich des Speichers R größer ist, also der Fall 131 zutrifft, als der Wert des Graphen $G^{min}$ mit dem minimalen Wert für das Diversitäts-Maß, dann wird der Graph $G^{min}$ durch den Graphen G im Speicher R ersetzt.

Das Ersetzen kann durch ein Löschen des Graphen $G^{min}$ 130 und ein anschließendes Hinzufügen des neuen Graphen G 140 durchgeführt werden.

b2b) Ansonsten, also im Fall 132, verwerfe den neuen Graphen G.

Das Verfahren kann vereinfacht beschrieben werden:

Ein von einem Erzeuger EGG von Ausführungsgraphen im Schritt 110 bereitgestellter Ausführungsgraph wird zunächst geprüft, ob der Graph zur Diversität im Repository R beiträgt oder nicht.

Trifft dies zu, so wird der Graph im Schritt 111 dem Repository R hinzugefügt und ein im Speicher R bereits enthaltener Graph mit geringerer Diversität wird entfernt.

Dies ist ein inkrementelles Verfahren, welches nahtlos in die Erzeugung von Ausführungsgraphen integriert werden kann.

Unterprozesse, wie das Berechnen von Distanzen von Ausführungsgraphen, können parallelisiert und/oder in einer Cloudbasierten Lösung abgearbeitet werden.

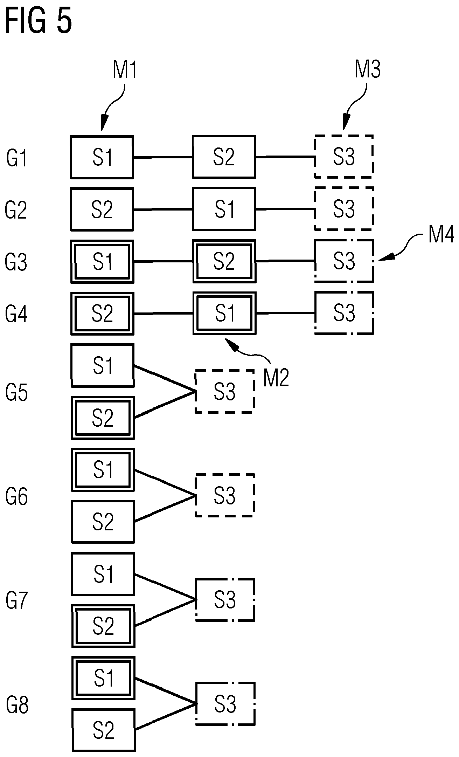

**Fig. 5** zeigt ein Beispiel für alle Ausführungsgraphen G1-G8 für die Herstellung eines Produkts, bei welchem drei Operationen, also Herstellungsschritte S1, S2, S3 notwendig sind.

Die Herstellungsschritte S1 und S2 können durch Maschinen M1 und M2 ausgeführt werden.

Der Herstellungsschritt S3 kann durch Maschinen M3 und M4 ausgeführt werden.

Die Herstellungsschritte S1 und S2 können parallel durchgeführt werden.

Der Herstellungsschritt S3 ist der letzte Herstellungsschritt.

Eine Kante zwischen zwei Knoten n1 und n2 bedeutet, dass der Knoten n1 vor dem Knoten n2 ausgeführt werden muss.

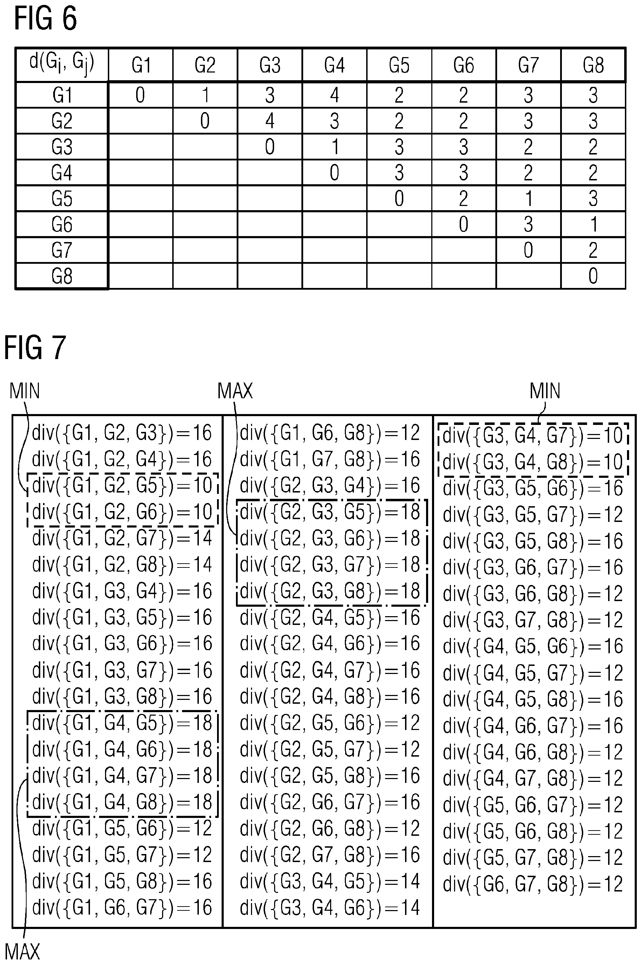

**Fig. 6** zeigt berechnete Distanzen zu den Beispielen der Fig. 5, welche mittels der Graph Edit-Distanz-Funktion (GED) bestimmt wurden.

Die Größe des Speichers für die Graphen beträgt 3.

Eine Distanz d(A, B) ist die Summe unterschiedlicher Maschinen, beziehungsweise deren Bearbeitungs- oder Durchführungszeit, die zur Durchführung derselben Operationen im Graph A und B verwendet werden, und zusätzlich die minimale Anzahl von Kantenänderungen, die erforderlich sind, um die Topologie von B mit der Topologie von A identisch zu machen.

**Fig. 7** zeigt berechnete Werte für das Divergenz-Maß zu den Beispielen der Fig. 5.

Es sind alle möglichen Ausführungsgraphen für Graphen mit der Speichergröße 3 angeführt.

Die optimalen Werte für das Divergenz-Maß sind als MAX-Werte gekennzeichnet, und die schlechtesten Werte als MIN-Werte.

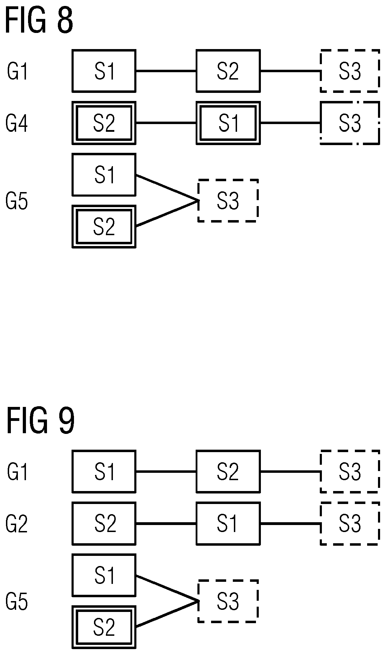

**Fig. 8** zeigt ein Beispiel für ein Repository R mit einem Ausführungsgraphen mit hoher Diversität,

**Fig. 9** zeigt ein Beispiel für ein Repository R mit einem Ausführungsgraphen mit niedriger Diversität.

Es ist in diesem Beispiel deutlich zu erkennen, dass das Repository R mit geringer Diversität eine Tendenz zur Maschine M1 aufweist.

Dies kann beispielsweise dadurch vorkommen, dass der Einschränkungslöser hinsichtlich einer schnellen Produktion optimiert und die Maschine M1 eben sehr schnell ist.

Aus Sicht des Verbrauchers wird ein Speicher R mit hohem Divergenz-Maß bevorzugt, da es eine höhere Auswahl an Optionen aufweist.

Das erfindungsgemäße Verfahren erlaubt eine Reduzierung des Satzes von Ausführungsgraphen im Ausführungsgraphen-Repository R auf einen Satz in überschaubarer Größe.

Ferner sind die Ausführungsgraphen im Repository R sehr unterschiedlich und stellen daher eine hohe Variabilität und Diversität dar.

Der grundlegende Vorteil dieses Ansatzes besteht darin, dass eine Skalierung der Herstellungsplanung auf Anlagen und Produkte der realen Welt unterstützt werden.

Der Kandidaten-Satz von Ausführungsgraphen für den Verbraucher, also dem Scheduler, hat eine überschaubare Größe, weist jedoch aufgrund seiner hohen Diversität eine hohe Wahrscheinlichkeit auf, dass alle Bereiche des Lösungsraums dargestellt werden.

Ähnliche Lösungen, die nicht zur Variabilität beitragen, werden im Repository reduziert, und erhöhen daher die Wahrscheinlichkeit, dass der Scheduler SCH eine optimale Lösung findet.

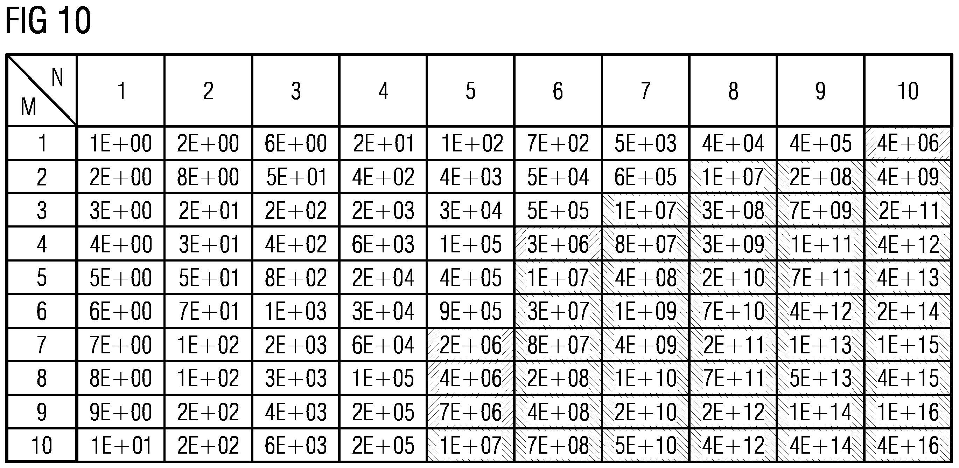

**Fig. 10** zeigt Beispiele für potenzielle Anzahlen von Ausführungsgraphen auf Basis einer Gegenüberstellung der Anzahl an Maschinen und der Anzahl an Herstellungsschritten für ein Produkt.

In den Spalten ist die Anzahl der Herstellungsschritte N des Produkts und in den Zeilen ist die Anzahl der Maschinen M in der Anlage ablesbar.

Vereinfachend kann davon ausgegangen werden, dass die Reihenfolge der Herstellungsschritte keine Rolle spielt und jede Maschine jede Operation ausführen kann.

Diese Annahme ist nicht völlig unrealistisch, und kann mit einer Aufgabe, Blöcke in eine Grundplatte einzufügen oder Schweißpunkte auf Metallplatten im Automobilbau anzubringen oder die Transportvorgänge einer Flotte mobiler Roboter zu planen, verglichen werden kann.

Eine obere Schranke der resultierenden Anzahl an Ausführungsgraphen kann mittels des Zusammenhangs

$$M^N \times N!$$

ermittelt werden.

Lokale und nicht-lokale Einschränkungen reduzieren diese Anzahl, jedoch typischerweise nicht um mehr als den Faktor 10 oder 100.

Die Herstellungsszenarien, die den markierten Zellen in der gezeigten Tabelle entsprechen, können ohne eine in dieser Erfindung vorgeschlagene Technik nicht behandelt werden.

**Bezugszeichenliste:**

| | |
|---|---|
| 110, 120, 130, 140, 150 | Verfahrensschritte |
| 111, 131 | JA-Entscheidung |
| 112, 132 | NEIN-Entscheidung |
| B | Flaschenhals, engl. "bottleneck" |
| $d(G_i, G_j)$ | Distanz-Funktion |
| div({...}) | Divergenz-Maß |
| EGG | Erzeuger von Ausführungsgraphen, engl. "execution graph generation" |
| R | Speicher für Ausführungsgraphen, engl. "execution graph repository" |
| G, G1-G8 | Ausführungsgraph |
| M | Anzahl an Maschinen |
| N | Anzahl an Herstellungsschritten für ein Produkt |
| SCH | Verbraucher, Konsument, engl. "scheduler" |
| SS1, SS2 | Lösungsraum, engl. "solution space" |
| S1-S3 | Operation, Herstellungschritt |
| M1-M4 | Maschine |
| n1, n2 | Knoten |

**Patentansprüche**

1. Verfahren zur Herstellung eines Produkts mittels einer optimalen Prozesskette, wobei eine Prozesskette zur Herstellung durch Herstellungsschritte (H1-H3) durch entsprechende Herstellungsmittel (M1-M4) in einer festgelegten Reihenfolge definiert ist, **dadurch gekennzeichnet, dass** eine Menge an Ausführungsgraphen (G, G1-G8) für alle möglichen Permutationen an Herstellungsschritten (H1-H3) und Herstellungsmitteln (M1-M4) unter Berücksichtigung der Reihenfolge gebildet wird (110), und folgende Schritte ausgeführt werden:

   a) Prüfen, ob eine Abbruchbedingung erfüllt ist,

   a1) Falls ja, Fortfahren mit Schritt c)
   a2) Falls nein, Auswählen eines aktuellen Graphen, welcher noch nicht ausgewählt wurde, aus der Menge an Ausführungsgraphen,

   b) Feststellen für den aktuellen Graphen, ob in einem Speichermittel noch verfügbarer Speicher zum Speichern des aktuellen Graphen (G) vorhanden ist:

   b1) Falls ja (111), Speichern (120) des aktuellen Graphen (G) durch das Speichermittel (R) mit einer vorbestimmten Größe, und Fortfahren mit Schritt a),
   b2) Falls nein (112), Berechnen (130) eines aktuellen Werts für das Diversitäts-Maß des aktuellen Graphs, und Prüfen, ob der aktuelle Wert geringer ist, als der kleinste Wert für das Diversitäts-Maß der im Speichermittel (R) gespeicherten Graphen,

   b2a) Falls ja (131), Austauschen (130, 140) des Graphen mit dem kleinsten Diversitäts-Maß im Speichermittel (R) durch den aktuellen Graphen, und Fortfahren mit Schritt a),
   b2b) Falls nein (132), Verwerfen des neuen Graphen, und Fortfahren mit Schritt a),

   c) Auswählen des Graphen anhand des Diversitäts-Maßes der jeweiligen Prozesskette als optimale Prozesskette aus dem Speicher (R),
   d) Herstellen des Produkts mithilfe der an Herstellungsschritten (H1-H3) und Herstellungsmittel (M1-M4) in einer festgelegten Reihenfolge gemäß der optimalen Prozesskette.

2. Verfahren nach dem vorhergehenden Anspruch, wobei im Schritt b1) ein jeweiliger Wert für das Diversitäts-Maß berechnet und im Speicher (R) gespeichert wird, und bei der Prüfung im Schritt b2) dieser Wert vom Speicher (R) abgefragt wird.

3. Verfahren nach einem der vorhergehenden Ansprüche, wobei die Größe des Speichermittels (R) höchstens 10%, bevorzugt 1% der Anzahl in der Menge der Ausführungsgraphen (G, G1-G8) beträgt.

4. Vorrichtung zur Herstellung eines Produkts mittels einer optimalen Prozesskette, wobei eine Prozesskette zur Herstellung durch Herstellungsschritte (H1-H3) durch entsprechende Herstellungsmittel (M1-M4) in einer festgelegten Reihenfolge definiert ist, wobei die Vorrichtung Herstellungsmittel (M1-M4) und eine Rechenvorrichtung mit einem Speicher (R) umfasst, **dadurch gekennzeichnet, dass** die Vorrichtung dazu eingerichtet ist, das Verfahren nach einem der vorhergehenden Ansprüche auszuführen.

FIG 1

EGG

B

SCH

FIG 2

SS1

SS2

# FIG 3

FIG 4

START

○

110

111

112

size(R) < maxSize(R) ?

120

130

◉

131

132

div(G, R) > div($G^{min}$, R) ?

140

◉

150

◉

# FIG 5

## FIG 6

| d(Gi, Gj) | G1 | G2 | G3 | G4 | G5 | G6 | G7 | G8 |
|---|---|---|---|---|---|---|---|---|
| G1 | 0 | 1 | 3 | 4 | 2 | 2 | 3 | 3 |
| G2 |  | 0 | 4 | 3 | 2 | 2 | 3 | 3 |
| G3 |  |  | 0 | 1 | 3 | 3 | 2 | 2 |
| G4 |  |  |  | 0 | 3 | 3 | 2 | 2 |
| G5 |  |  |  |  | 0 | 2 | 1 | 3 |
| G6 |  |  |  |  |  | 0 | 3 | 1 |
| G7 |  |  |  |  |  |  | 0 | 2 |
| G8 |  |  |  |  |  |  |  | 0 |

## FIG 7

MIN          MAX                    MIN

div({G1, G2, G3})=16   div({G1, G6, G8})=12   div({G3, G4, G7})=10
div({G1, G2, G4})=16   div({G1, G7, G8})=16   div({G3, G4, G8})=10
div({G1, G2, G5})=10   div({G2, G3, G4})=16   div({G3, G5, G6})=16
div({G1, G2, G6})=10   div({G2, G3, G5})=18   div({G3, G5, G7})=12
div({G1, G2, G7})=14   div({G2, G3, G6})=18   div({G3, G5, G8})=16
div({G1, G2, G8})=14   div({G2, G3, G7})=18   div({G3, G6, G7})=16
div({G1, G3, G4})=16   div({G2, G3, G8})=18   div({G3, G6, G8})=12
div({G1, G3, G5})=16   div({G2, G4, G5})=16   div({G3, G7, G8})=12
div({G1, G3, G6})=16   div({G2, G4, G6})=16   div({G4, G5, G6})=16
div({G1, G3, G7})=16   div({G2, G4, G7})=16   div({G4, G5, G7})=12
div({G1, G3, G8})=16   div({G2, G4, G8})=16   div({G4, G5, G8})=16
div({G1, G4, G5})=18   div({G2, G5, G6})=12   div({G4, G6, G7})=16
div({G1, G4, G6})=18   div({G2, G5, G7})=12   div({G4, G6, G8})=12
div({G1, G4, G7})=18   div({G2, G5, G8})=16   div({G4, G7, G8})=12
div({G1, G4, G8})=18   div({G2, G6, G7})=16   div({G5, G6, G7})=12
div({G1, G5, G6})=12   div({G2, G6, G8})=12   div({G5, G6, G8})=12
div({G1, G5, G7})=12   div({G2, G7, G8})=16   div({G5, G7, G8})=12
div({G1, G5, G8})=16   div({G3, G4, G5})=14   div({G6, G7, G8})=12
div({G1, G6, G7})=16   div({G3, G4, G6})=14

MAX

## FIG 8

## FIG 9

## FIG 10

| M \ N | 1 | 2 | 3 | 4 | 5 | 6 | 7 | 8 | 9 | 10 |
|---|---|---|---|---|---|---|---|---|---|---|
| 1 | 1E+00 | 2E+00 | 6E+00 | 2E+01 | 1E+02 | 7E+02 | 5E+03 | 4E+04 | 4E+05 | 4E+06 |
| 2 | 2E+00 | 8E+00 | 5E+01 | 4E+02 | 4E+03 | 5E+04 | 6E+05 | 1E+07 | 2E+08 | 4E+09 |
| 3 | 3E+00 | 2E+01 | 2E+02 | 2E+03 | 3E+04 | 5E+05 | 1E+07 | 3E+08 | 7E+09 | 2E+11 |
| 4 | 4E+00 | 3E+01 | 4E+02 | 6E+03 | 1E+05 | 3E+06 | 8E+07 | 3E+09 | 1E+11 | 4E+12 |
| 5 | 5E+00 | 5E+01 | 8E+02 | 2E+04 | 4E+05 | 1E+07 | 4E+08 | 2E+10 | 7E+11 | 4E+13 |
| 6 | 6E+00 | 7E+01 | 1E+03 | 3E+04 | 9E+05 | 3E+07 | 1E+09 | 7E+10 | 4E+12 | 2E+14 |
| 7 | 7E+00 | 1E+02 | 2E+03 | 6E+04 | 2E+06 | 8E+07 | 4E+09 | 2E+11 | 1E+13 | 1E+15 |
| 8 | 8E+00 | 1E+02 | 3E+03 | 1E+05 | 4E+06 | 2E+08 | 1E+10 | 7E+11 | 5E+13 | 4E+15 |
| 9 | 9E+00 | 2E+02 | 4E+03 | 2E+05 | 7E+06 | 4E+08 | 2E+10 | 2E+12 | 1E+14 | 1E+16 |
| 10 | 1E+01 | 2E+02 | 6E+03 | 2E+05 | 1E+07 | 7E+08 | 5E+10 | 4E+12 | 4E+14 | 4E+16 |

EP 3 961 528 A1

Europäisches Patentamt

European Patent Office

Office européen des brevets

**EUROPÄISCHER RECHERCHENBERICHT**

Nummer der Anmeldung

EP 20 19 2661

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/167316 A1 (SIEMENS AG [DE]; SIEMENS CORP [US]) 20. August 2020 (2020-08-20) * Absätze [0004] - [0008], [0014] - [0032], [0073], [0075] - [0079] * ----- | 1-4 | INV. G06Q10/06 G06Q50/04 G06Q10/04 |

RECHERCHIERTE SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| München | 11. Januar 2021 | Breidenich, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 2661

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2021

| Im Recherchenbericht angeführtes Patentdokument | Datum der Veröffentlichung | Mitglied(er) der Patentfamilie | Datum der Veröffentlichung |
|---|---|---|---|
| WO 2020167316 A1 | 20-08-2020 | KEINE | |

Für nähere Einzelheiten zu diesem Anhang : siehe Amtsblatt des Europäischen Patentamts, Nr.12/82

EPO FORM P0461